(19) Europäisches Patentamt
European Patent Office
Office européen des brevets

(11) Veröffentlichungsnummer: **0 025 478**
**B1**

# (12) EUROPÄISCHE PATENTSCHRIFT

(45) Veröffentlichungstag der Patentschrift: **29.12.82**

(51) Int. Cl.³: **C 09 D 3/66,** C 08 L 67/02

(21) Anmeldenummer: **80103433.1**

(22) Anmeldetag: **20.06.80**

## (54) Wärmehärtbare Überzugsmittel auf Basis von Polyestern.

(30) Priorität: **25.08.79 DE 2934416**

(43) Veröffentlichungstag der Anmeldung: **25.03.81 Patentblatt 81/12**

(45) Bekanntmachung des Hinweises auf die Patenterteilung: **29.12.82 Patentblatt 82/52**

(84) Benannte Vertragsstaaten: **DE FR GB IT NL**

(56) Entgegenhaltungen:
**CH-A-571 562**
**DE-A-2 437 217**
**US-A-4 014 708**
**US-A-4 129 681**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG, Postfach 1320, D-4370 Marl 1 (DE)**

(72) Erfinder: **Rüter, Jörn, Dr., Dormagener Strasse 42, D-4370 Marl (DE)**
Erfinder: **Haneklaus, Karl-Heinz, Röntgenstrasse 16, D-4370 Marl (DE)**

**EP 0 025 478 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Wärmehärtbare Überzugsmittel auf Basis von Polyestern

Gegenstand der Erfindung sind wärmehärtbare Überzugsmittel auf der Grundlage einer Mischung aus Bindemittel, organischem Lösemittel sowie gegebenenfalls Pigmenten, Füllstoffen und weiter üblichen Hilfs- und Zusatzstoffen, die als Bindemittel

A. 5 bis 25 Gewichtsprozent Aminoplaste und
B. 75 bis 95 Gewichtsprozent hydroxylgruppenhaltige, gesättigte Polyester aus aliphatischen Diolen mit 2 bis 12 C-Atomen in der Kohlenstoffkette, gegebenenfalls cycloaliphatischen Diolen und 2.2-Dimethylpropandiol-(1.3) einerseits und aromatischen sowie gegebenenfalls aliphatischen und cycloaliphatischen Dicarbonsäuren andererseits enthalten, wobei die Polyester eine Viskositätszahl im Bereich von 40 bis 80 $cm^3/g$ und einen Glasumwandlungspunkt $>50°C$ besitzen.

Lösungsmittelhaltige Überzugsmittel, welche als Bindemittel ein Gemisch aus Aminoplasten und hochmolekularen, linearen Polyestern enthalten, sind bekannt. So werden in der DE-B-1 807 776 Bindemittel beschrieben, die neben Benzoguanaminharzen Polyester aus Terephthal- und Isophthalsäure sowie gegebenenfalls aliphatischen Dicarbonsäuren einerseits und linearen, aliphatischen Diolen und 2.2-Dimethylpropandiol-(1.3) andererseits enthalten. Nach eigenen Angaben der Anmelderin (DE-A-2 126 048) können nur Überzüge mit dünnen Schichtdicken hergestellt werden. Bei höheren Schichtdicken, wie sie üblicherweise verwendet werden, treten bei einer Verformung Risse in der Filmschicht auf.

Aus diesem Grunde wurden die genannten Produkte abgeändert, so daß nur noch solche Polyester eingesetzt werden sollen, die einen Glasumwandlungspunkt im Bereich zwischen 30°C und 50°C besitzen (DE-A-2 126 048). Auch diese modifizierten Überzugsmittel weisen bei höheren Schichtdicken immer noch eine nicht ausreichende Flexibilität bzw. eine nicht hinreichende Korrosionsschutzwirkung auf.

DE-A-2 211 059 beschreibt Überzugsmittel, bestehend aus linearen Polyestern, die im speziellen den Neopentylglykolester der Hydroxypivalinsäure enthalten. Die genannten linearen Polyester können gegebenenfalls in Verbindung mit Aminoplasten eingebrannt werden. Die beschriebenen Überzugsmittel weisen wohl hinlänglich gute Flexibilitäten auf, jedoch lassen sie in der Oberflächenhärte bzw. in der Korrosionsschutzwirkung zu wünschen übrig.

Die DE-C-2 521 792 beschreibt Überzugsmittel, die neben Aminoplasten Polyester aus aliphatischen Diolen und 2.2-Dimethylpropandiol-(1.3) einerseits und Tere- bzw. Isophthalsäure und Hexahydroterephthalsäure andererseits enthalten. Filme aus diesen Überzugsmitteln weisen eine gute Flexibilität bei gleichzeitig hoher Oberflächenhärte und eine gute Korrosionsschutzwirkung auf.

In der DE-C-2 521 791 schließlich werden Überzugsmittel beschrieben, die neben Aminoplasten Polyester aus aliphatischen Diolen, 2.2-Dimethyl-propandiol-(1.3) und 1.4-Hydroxymethylcyclohexan einerseits und Tere- bzw. Isophthalsäure andererseits enthalten. Diese Überzugsmittel liefern nach dem Einbrennen Filme mit besonders hoher Flexibilität bei gleichzeitig hoher Oberflächenhärte und mit besonders guter Korrosionsschutzwirkung.

Ferner werden in US-A-4 014 708 und DE-A1-2 437 217 Überzugsmittel beschrieben, bei denen Polyester als Bindemittel verwendet werden. Gegebenenfalls können diese Polyester mehrfunktionale Verbindungen enthalten. Wesentliches Merkmal der Polyester ist ihre geringe Molmasse, die aber die Eigenschaften der fertigen Überzüge sehr stark beeinflußt. Deutlicher Nachteil der entsprechend den Druckschriften hergestellten Überzüge sind ihre mangelnde Sterilisierbarkeit sowie ihre mangelnde Flexibilität.

Allen diesen beschriebenen Überzugsmitteln ist gemeinsam, daß die damit hergestellten Überzüge erst dann eine ausreichende Lösungsmittelbeständigkeit aufweisen, wenn sie für einen genügend langen Zeitraum bei einer ausreichend hohen Temperatur eingebrannt werden. Diese Beständigkeit ist für bestimmte Anwendungen, z. B. für Grundierungen, unbedingt erforderlich.

Aufgabe der vorliegenden Erfindung war es, Überzugsmittel bereitzustellen, die gegenüber dem Stand der Technik bei tieferer Temperatur bzw. in kürzeren Zeiten eingebrannt werden können und dabei Überzüge ergeben, die bei guten Allgemeineigenschaften ausgezeichnete Lösemittelbeständigkeit besitzen.

Diese Aufgabe konnte dadurch gelöst werden, daß der als Teil des im Überzugsmittel enthaltenen Bindemittels vorhandene Polyester der Komponente B. 0.1 bis 2 Gewichtsprozent, bezogen auf den Dicarbonsäureanteil, Reste einer polyfunktionellen Verbindung mit sauerstoffenthaltenden funktionellen Gruppen enthält, wobei die Funktionalität der Verbindung $\geq 3$ ist. Vorzugsweise sind die erfindungsgemäßen polyfunktionellen Verbindungen zu 0.5 bis 1.2 Gewichtsprozent im Polyester enthalten.

Als solche Verbindungen können aromatische und aliphatische Polycarbonsäuren, wie Trimesinsäure, Trimellitsäure, Pyromellitsäure, Benzoltricarbonsäure-(1.2.3), Benzoltetracarbonsäure-(1.2.3.4), Benzoltetracarbonsäure-(1.2.3.5), Ethylentetracarbonsäure, 1.2.3.4-Butantetracarbonsäure,

1.2.3.4-Cyclopentantetracarbonsäure, 1.2.3.4-Cyclohexantetracarbonsäure oder Gemische hiervon eingesetzt werden.

Als Polyole kommen Glycerin, Trimethylolpropan, Pentaerythrit, Butantriol-(1.2.3), Butantriol-(1.2.4) in Frage.

Es ist vorteilhaft, wenn im Falle von Polycarbonsäuren ein Molekulargewicht von 500 und im Falle von Polyolen ein Molekulargewicht von 250 nicht überschritten wird.

Anstelle der Polycarbonsäuren können auch deren Voll- oder Teilester mit kurzkettigen Alkoholen, wie Methanol, Ethanol, o. ä. eingesetzt werden.

Neben den niedermolekularen polyfunktionellen Verbindungen können auch hochmolekulare Produkte verwendet werden. Diese entsprechen der allgemeinen Formel

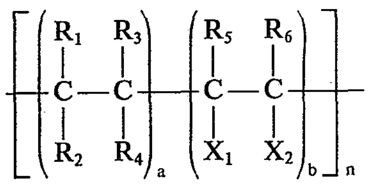

in der

n eine Zahl von 10 bis 10 000,
a eine Zahl von 1 bis 100 oder 0,
b eine Zahl von 1 bis 100,
$R_1$ bis $R_6$ einen Alkylrest mit 1 bis 3 C-Atomen, einen Arylrest mit 6 bis 10 C-Atomen oder eine $R_7O$-Gruppe, wobei $R_7$ einen Alkylrest mit 1 bis 6 C-Atomen darstellt,
$X_1$ Wasserstoff, einen Alkylrest mit 1 bis 3 C-Atomen, eine

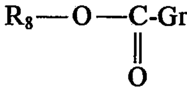

-Gruppe,

wobei $R_8$ Wasserstoff oder eine Alkylgruppe mit 1 bis 6 C-Atomen darstellt,

$X_2$ eine

$R_9$—O- oder 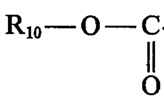 -Gruppe,

wobei $R_9$ Wasserstoff oder eine Acyl-Gruppe mit 1 bis 8 C-Atomen und $R_{10}$ Wasserstoff oder eine Alkylgruppe mit 1 bis 6 C-Atomen darstellt,

bedeutet.

Besonders haben sich als polyfunktionelle Verbindungen Glycerin, Trimethylolpropan, Pentaerythrit, Trimesinsäure, Trimellitsäure oder mit Methanol veresterte Copolymere aus Ethylen und Maleinsäureanhydrid im Molverhältnis 1 : 1 (EMA®-Harze) bewährt.

Die in der Bindemittelkomponente enthaltenen Polyester bestehen in dem Dicarbonsäureanteil zu 40 bis 60 Molprozent aus Terephthalsäure und zu 40 bis 60 Molprozent aus Isophthalsäure. Vorzugsweise werden diese Dicarbonsäuren zu etwa gleichen Anteilen eingesetzt. Daneben kann der Dicarbonsäureanteil noch bis zu 30 Molprozent, vorzugsweise bis zu 15 Molprozent, einer aliphatischen oder cycloaliphatischen Dicarbonsäure, wie z. B. Adipinsäure, Azelainsäure, Sebazinsäure, Dodecandisäure oder Hexahydroterephthalsäure enthalten. Alle Carbonsäuren können auch als Ester kurzkettiger Alkohole wie Methanol, Ethanol, Propanol o. ä. eingesetzt werden.

Als Diole enthalten die Polyester in der Alkoholkomponente einmal aliphatische, Diole mit 2 bis 12 Kohlenstoffatomen, wie z. B. Ethylenglykol, Propandiol-(1.3), Butandiol-(1.4), Hexandiol-(1.6), Dodecandiol-(1.12). Die aliphatischen Diole sind zu 30 bis 60 Molprozent, vorzugsweise zu 40 bis 50 Molprozent, in der Alkoholkomponente enthalten, wobei wiederum 0 bis 40 Molprozent, bezogen auf die Alkoholkomponente, durch weitere cycloaliphatische Diole, wie z. B. 1.4-Bis-hydroxymethyl-cyclohexan, ersetzt sein können.

Daneben enthalten die eingesetzten Polyester noch 2.2-Dimethyl-propandiol-(1.3). Dieses Diol ist zu 40 bis 70 Molprozent, vorzugsweise 50 bis 60 Molprozent, in der Diolkomponente enthalten.

Die Polyester werden nach bekannten Verfahren hergestellt. (W. R. Sorenson, T. W. Campbell, Preparative Methods of Polymer Chemistry, Interscience Publishers, Inc., New York, 1961, Seiten 111 bis 127; H. Ludewig, Polyester — Fasern, Chemie und Technologie —, Akademie-Verlag Berlin, 1975, Seiten 95 ff.)

Der Zusatz der polyfunktionellen Verbindungen erfolgt im allgemeinen vor der Umesterungs- bzw.

Veresterungsstufe. Falls Polycarbonsäuren in der Form ihrer Ester eingesetzt werden, ist ihre Zugabe vor der Umesterungsstufe in jedem Fall notwendig. Freie polyfunktionelle Carbonsäuren und Alkohole können auch noch zu Beginn der Polykondensationsstufe zugesetzt werden.

Werden die erfindungsgemäßen polyfunktionellen Verbindungen in größeren Mengen als angegeben eingesetzt, besteht die Gefahr, daß die mit dem Polyester hergestellten Überzüge keine ausreichende Elastizität aufweisen; außerdem kann bei der Herstellung der Polyester Vernetzung (»Gelierung«) eintreten. Geringere als die angegebenen Mengen führen zu keinem ausreichenden Effekt.

Die Polyester besitzen eine Viskositätszahl von 40 bis 80 $cm^3/g$. Bevorzugt werden Polyester mit einer Viskositätszahl im Bereich von 50 bis 70 $cm^3/g$.

Die Eigenschaften der aus den erfindungsgemäß zu verwendenden Copolyestern hergestellten Lacküberzüge werden sowohl durch das Molekulargewicht als auch durch die Zusammensetzung der Copolyester bestimmt. Verwendet man Copolyester mit niedrigen Viskositätszahlen, so besitzen die Überzüge in der Regel eine hohe Härte, jedoch keine ausreichende Flexibilität. Verwendet man Polyester mit höheren Viskositätszahlen, so wird die Flexibilität wesentlich verbessert. Allerdings wird infolge der dadurch bedingten Verminderung der Löslichkeit der Copolyester eine Grenze nach oben gesetzt.

Die in den Polyestern enthaltene Terephthalsäure sollte etwa die Hälfte des aromatischen Dicarbonsäureanteils ausmachen. Eine übermäßige Erhöhung des Terephthalsäureanteils bedingt meist eine Verminderung der Löslichkeit in den üblichen Lacklösemitteln. Dagegen führt eine Erhöhung des Isophthalsäure- bzw. zum Beispiel des Hexahydroterephthalsäureanteils zu einer Verbesserung der Löslichkeit; allerdings ist dies mit einer Erniedrigung des Erweichungsbereiches verbunden.

Zur Gewährleistung einer zufriedenstellenden Löslichkeit sollte der Diolanteil mindestens 30 Molprozent 2.2-Dimethylpropandiol-(1.3) enthalten. Ist dagegen der Anteil an diesem Diol zu hoch, so besitzen die daraus hergestellten Überzüge keine befriedigende Oberflächenhärte.

Als geeignete Aminoplaste kommen die bekannten Umsetzungsprodukte von Aldehyden, insbesondere Formaldehyd, mit z. B. Melamin, Benzoguanamin oder auch Amiden, wie Dicyandiamid oder Harnstoff, in Frage. Geeignet sind ferner Gemische aus derartigen Produkten. Bevorzugt eingesetzt werden die Aminoplaste auf Basis von Melamin oder Benzoguanamin. Besonders geeignet sind die mit Alkohol vollständig oder partiell veretherten Aminoplaste. Während bei Melaminformaldehydharzen als Veretherungskomponente Methanol bevorzugt wird, können Benzoguanaminformaldehydharze auch vorteilhaft in ihrer butyl- oder isobutyl-veretherten Form angewendet werden. Für den erfindungsgemäßen Verwendungszweck steht eine Vielzahl handelsüblicher Aminoplaste zur Verfügung.

Zur Herstellung der Überzugsmittel werden zunächst Lösungen des Polyesters und des Aminoplasten miteinander vermischt. Das Gewichtsverhältnis von Polyester zu Aminoplast kann zwischen 95 : 5 bis 75 : 25, vorzugsweise zwischen 90 : 10 bis 80 : 20, schwanken. Das für den jeweiligen Verwendungszweck der Überzugsmittel optimale Verhältnis der beiden Komponenten zueinander läßt sich durch Vorversuche leicht ermitteln.

Dabei ist zu berücksichtigen, daß häufig durch Erhöhung des Aminoplastanteils sich die Härte der Überzüge erhöht und ihre Elastizität sich vermindert, während bei Erniedrigung des Aminoplastanteils die Härte nachläßt und die Flexibilität zunimmt.

Die erfindungsgemäßen Überzugsmittel werden in üblichen Lacklösungsmitteln verarbeitet. Als solche kommen beispielsweise Methylacetat, Ethylacetat, Acetessigester, Butylacetat, Ethylglykol, Ethylglykolacetat, Butylglykol, Methylethylketon, Methylisobutylketon, Cyclohexanon, 2-Nitropropan, Isophoron, Dioxan, Dimethylformamid, Methylglykolacetat, Ethylglykolacetat, Benzoesäuremethylester, Trichlorethylen oder andere Halogenkohlenwasserstoffe oder Gemische davon in Frage. Ferner können auch aromatische Lösungsmittel, wie beispielsweise Xylol, Toluol, Benzol und SOLVESSO® bzw. höhersiedende Aromatenschnitte oder aber aliphatische Kohlenwasserstoffgemische, wie z. B. Lackbenzin, verwendet werden. Der Anteil des Lösungsmittels im gesamten Überzugsmittel beträgt 50 bis 75 Gewichtsprozent.

Zur Aushärtung werden den erfindungsgemäßen Überzugsmitteln saure Katalysatoren zugefügt. Hierfür eignen sich Mineralsäuren, wie Salzsäure, Schwefelsäure und Phosphorsäure oder organische Säuren, wie Oxalsäure, Benzolsulfonsäure, Toluolsulfonsäure; aber auch deren Veresterungsprodukte mit Methanol, Ethanol, Propanol, Ethylenglykol und Propylenglykol sowie Addukte aus Sulfonsäure und Epoxidverbindung kommen in Frage. Weiterhin können auch Toluolsulfonsäuresalze mit bei höheren Temperaturen flüchtigen Basen, wie beispielsweise Ammoniak, Mono-, Di- und Trialkylaminen, Morpholin, Dimethylformamid, Dimethylacetamid, N-Methylpyrrolidon u. ä. eingesetzt werden. Die Katalysatoren sind in Mengen von 0.5 bis 3 Gewichtsprozent, vorzugsweise von 0.5 bis 1.0 Gewichtsprozent — bezogen auf den Aminoplasten —, im Überzugsmittel enthalten.

Ferner können die Überzugsmittel noch Pigmente und Füllstoffe, wie beispielsweise Titandioxid, Kreide, Kieselsäure, Magnesiumoxid oder Farbpigmente enthalten. Daneben können übliche Zusatz- und Hilfsstoffe, wie beispielsweise Verlaufmittel oder Thixotropiermittel, eingesetzt werden.

Die Überzugsmittel werden nach bekannten Verfahren, beispielsweise durch Streichen, Spritzen,

Tauchen oder Walzen aufgetragen und bei Temperaturen zwischen 100 und 350°C eingebrannt. Die erhaltenen Überzüge zeichnen sich — selbst bei großer Schichtdicke — durch hohe Elastizität in Verbindung mit guter Oberflächenhärte aus. Ferner besitzen sie ein ausgezeichnetes Witterungsverhalten und eine ausgezeichnete Korrosionsschutzwirkung.

Neben den guten Allgemeineigenschaften der Überzugsmittel sowie der daraus hergestellten Überzüge können die erfindungsgemäßen Überzugsmittel im Vergleich zu Produkten des Standes der Technik bei niederen Temperaturen bzw. in kürzerer Zeit eingebrannt werden. Hierdurch ergeben sich deutliche Energieeinsparungen. Gleichzeitig werden Überzüge mit hervorragender Lösemittelbeständigkeit erhalten.

## Beispiele

Die in den Beispielen aufgeführten Meßergebnisse werden mit Hilfe nachstehender Methoden ermittelt:

Viskositätszahl:

$$\frac{\eta\ \mathrm{rel} - 1}{c}\ c = \left[\frac{g}{cm^3}\right],$$

| | |
|---|---|
| | wobei $\eta_{rel}$ = die relative Lösungsviskosität einer Lösung des Polyesters bei 25°C in Phenol/Tetrachlorethan (Gewichtsverhältnis 3 : 2) ist c = 0.023 [g/cm³] |
| MEK-Test: | Der eingebrannte Film wird mit einem mit Methylethylketon (MEK) getränkten Lappen so lange gerieben (eine Hin- und Herbewegung = 1 Dw), bis der eingebrannte Überzug vom Substrat (z. B. Stahlblech) völlig entfernt ist. Für den Einsatz von Bindemitteln in Grundierungen werden wenigstens 80 Dw gefordert. |
| T-Bend-Test: | ECCA-Norm |
| Weatherometertest: | 6000-W-Xenon-Lampe, Cyclus 17/3; Beendigung der Prüfung bei einem Glanzverlust von 10%. |
| Kesternich-Test: | DIN 50 017 |
| Salzsprüh-Test: | ASTM-B-117-64 (abgebrochen bei einer Unterrostungsbreite von 2 mm) |
| Pendelhärte: | DIN 53 157 (nach König) |
| Gitterschnitt: | DIN 53 151 |
| Näpfchentest: | nach Erichsen |
| Glanz: | nach Lange |

Mit Buchstaben gekennzeichnete Beispiele sind nicht erfindungsgemäß.

## Beispiel 1

85 Gewichtsteile eines Copolyesters, der aus den Resten der Terephthalsäure, Isophthalsäure sowie des Ethylenglykols, 1.3-Bishydroxymethylcyclohexans und 2.2-Dimethylpropandiols-(1.3) im Molverhältnis 50 : 50/10 : 30 : 60 aufgebaut ist und der in Gegenwart von 0.8 Gewichtsprozent, bezogen auf Terephthal- und Isophthalsäure, eines handelsüblichen, mit Methanol veresterten Ethylen-Maleinsäureanhydrid 1 : 1 Copolymeren (EMA®31 der Fa. Monsanto) hergestellt wurde (Viskositätszahl: 55 $cm^3/g$), wurde in 198 Gewichtsteilen eines Lösungsmittelgemisches aus SOLVESSO 100 und Ethylglykolacetat (Gewichtsverhältnis: 70 : 30) gelöst. Diese Lösung wurde mit 15 Gewichtsteilen eines handelsüblichen Hexamethoxymethylmelaminharzes (MAPRENAL®MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf 0.8 mm starkes Stahlblech aufgebracht und eingebrannt (Schichtdicke 30 bis 35 µm).

## Beispiel A

Beispiel 1 wurde ohne einen Zusatz des mit Methanol veresterten Ethylen-Maleinsäureanhydrid-Copolymeren wiederholt.

Beispiel 2

85 Gewichtsteile eines Copolyesters, der aus den Resten der Terephthalsäure, Isophthalsäure, Hexahydroterephthalsäure sowie des Ethylenglykols und 2.2-Dimethylpropandiols-(1.3) im Molverhältnis 50 : 40 : 10/44 : 56 aufgebaut ist und der in Gegenwart von 0.8 Gewichtsprozent, bezogen auf Terephthalsäure, Isophthalsäure und Hexahydroterephthalsäure, Trimesinsäure hergestellt wurde (Viskositätszahl: 58 $cm^3/g$), wurde in 198 Gewichtsteilen eines Lösungsmittelgemisches aus SOLVESSO 100 und Ethylglykolacetat (Gewichtsverhältnis: 70/30) gelöst. Diese Lösung wurde mit 15 Gewichtsteilen eines handelsüblichen Hexamethoxymethylmelaminharzes (MAPRENAL®MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf 0.8 mm starkes Stahlblech aufgebracht und eingebrannt (Schichtdicke 30 bis 35 µm).

Beispiel B

Beispiel 2 wurde ohne den Zusatz von Trimesinsäure wiederholt.

Beispiel 3

85 Gewichtsteile eines Copolyesters, der aus den Resten der Terephthalsäure, Isophthalsäure sowie des Ethylenglykols und 2.2-Dimethylpropandiols-(1.3) im Molverhältnis 50 : 50/44 : 56 aufgebaut ist und der in Gegenwart von 1.0 Gewichtsprozent, bezogen auf Terephthalsäure und Isophthalsäure, Trimethylolpropan hergestellt wurde (Viskositätszahl: 60 $cm^3/g$), wurde in 198 Gewichtsteilen eines Lösungsmittelgemisches aus SOLVESSO 100 und Ethylglykolacetat (Gewichtsverhältnis: 70/30) gelöst. Diese Lösung wurde mit 15 Gewichtsteilen eines handelsüblichen Hexamethoxymethylmelaminharzes (MAPRENAL®MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf 0.8 mm starkes Stahlblech aufgebracht und eingebrannt (Schichtdicke 30 bis 35 µm).

Beispiel C

Beispiel 3 wurde ohne den Zusatz von Trimethylolpropan wiederholt.

Tabelle

| | Beispiel 1 | 2 | 3 | A | B | C |
|---|---|---|---|---|---|---|
| MEK-Test [Dw] | | | | | | |
| Einbrenntemp./Zeit | | | | | | |
| 230°C/60 s | 110 | 90 | 90 | 20 | 10 | 10 |
| 240°C/60 s | 300 | 250 | 240 | 60 | 50 | 30 |
| 250°C/60 s | 450 | 500 | 300 | 140 | 100 | 90 |
| 260°C/60 s | >700 | >700 | >700 | 250 | 180 | 140 |
| 250°C/55 s | 300 | 320 | 150 | 100 | 80 | 70 |
| 250°C/50 s | 180 | 200 | 100 | 60 | 30 | 30 |
| 250°C/45 s | 90 | 110 | 80 | 10 | 10 | 10 |
| T-Bend-Test | T 0 | T 0 | T 2 | T 0 | T 0 | T 2–3 |
| Weatherometer [h] | 1100 | 1050 | 1100 | 1200 | 1100 | 1100 |
| Kesternichtest (Runden) | >20 | 20 | 20 | >20 | 19 | 20 |
| Salzsprühtest [h] (2 mm Unterrostung) | 1000 | 1100 | 1000 | 1000 | 1000 | 1000 |
| Pendelhärte [sec] | 180–190 | 180–190 | 180–190 | 170 | 180–190 | 180–190 |
| Gitterschnitt (8 mm Tiefung) | GT 0–1 | GT 0–1 | GT 2 | GT 0–1 | GT 0–1 | GT 2–3 |
| Näpfchentest | in Ordnung | in Ordnung | leichte Kräuselung | in Ordnung | in Ordnung | leichte Kräuselung |
| Glanz [%] | 98 | 99 | 97 | 95 | 98 | 95 |

**Patentansprüche**

1. Wärmehärtbares Überzugsmittel auf der Grundlage einer Mischung aus Bindemittel, organischem Lösemittel sowie gegebenenfalls Pigmenten, Füllstoffen und weiter üblichen Hilfs- und Zusatzstoffen, das als Bindemittel

A. 5 bis 25 Gewichtsprozent Aminoplaste und
B. 75 bis 95 Gewichtsprozent hydroxylgruppenhaltige, gesättigte Polyester aus aliphatischen Diolen mit 2 bis 12 C-Atomen in der Kohlenstoffkette, gegebenenfalls cycloaliphatischen Diolen und 2.2-Dimethylpropandiol-(1.3) einerseits und aromatischen sowie gegebenenfalls aliphatischen und cycloaliphatischen Dicarbonsäuren andererseits enthält, wobei die Polyester eine Viskositätszahl im Bereich von 40 bsi 80 $cm^3/g$ und einen Glasumwandlungspunkt $>50°C$ besitzen,

dadurch gekennzeichnet, daß der Polyester der Komponente B. 0.1 bis 2 Gewichtsprozent, bezogen auf den Dicarbonsäureanteil, Reste einer polyfunktionellen Verbindung mit sauerstoffenthaltenden funktionellen Gruppen enthält, wobei die Funktionalität der Verbindung $\geq 3$ ist.

2. Wärmehärtbares Überzugsmittel gemäß Anspruch 1, dadurch gekennzeichnet, daß die Reste der polyfunktionellen Verbindung zu 0.5 bis 1.2 Gewichtsprozent, bezogen auf den Dicarbonsäureanteil, im Polyester enthalten sind.

3. Wärmehärtbares Überzugsmittel nach Anspruch 1 und 2, dadurch gekennzeichnet, daß die polyfunktionelle Verbindung eine aliphatische oder aromatische Polycarbonsäure mit einem Molgewicht $<500$ ist.

4. Wärmehärtbares Überzugsmittel nach Anspruch 1 und 2, dadurch gekennzeichnet, daß die polyfunktionelle Verbindung ein Polyol mit einem Molekulargewicht $<250$ ist.

5. Wärmehärtbares Überzugsmittel nach Anspruch 1 und 2, dadurch gekennzeichnet, daß die polyfunktionelle Verbindung der allgemeinen Formel

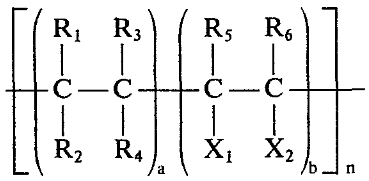

entspricht, in der

n eine Zahl von 10 bis 10 000,
a eine Zahl von 1 bis 100 oder 0,
b eine Zahl von 1 bis 100,
$R_1$ bis $R_6$ einen Alkylrest mit 1 bis 3 C-Atomen, einen Arylrest mit 6 bis 10 C-Atomen oder eine $R_7O$-Gruppe, wobei $R_7$ einen Alkylrest mit 1 bis 6 C-Atomen darstellt,
$X_1$ Wasserstoff, einen Alkylrest mit 1 bis 3 C-Atomen, eine

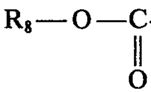-Gruppe,

wobei $R_8$ Wasserstoff oder eine Alkylgruppe mit 1 bis 6 C-Atomen darstellt,

$X_2$ eine $R_9-O-$ oder 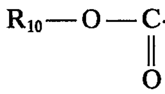-Gruppe,

wobei $R_9$ Wasserstoff oder eine Acyl-Gruppe mit 1 bis 8 C-Atomen und $R_{10}$ Wasserstoff oder eine Alkylgruppe mit 1 bis 6 C-Atomen darstellt,

bedeutet.

**Claims**

1. A heat-curable coating composition based on a mixture of a binder, an organic solvent and optionally pigments, fillers and other conventional assistants and additives, the binder being

A. 5 to 25% by weight of an aminoplast and
B. 75 to 95% by weight of a saturated polyester containing hydroxyl groups and derived on the one hand from aliphatic diol(s) of 2 to 12 carbon atoms in the carbon chain, optionally cycloaliphatic diol(s), and 2,2-dimethylpropane-1,3-diol and on the other hand from aromatic dicarboxylic acid(s) and optionally aliphatic and cycloaliphatic dicarboxylic acid(s), the polyester having a viscosity number of from 40 to 80 $cm^3/g$ and a glass transition temperature above 50° C,

characterised in that the polyester of component B contains 0.1 to 2% by weight, based on the dicarboxylic acid fraction, of radicals of a polyfunctional compound with oxygencontaining functional groups, the functionality of the polyfunctional compound being at least 3.

2. A heat-curable coating composition according to claim 1, characterised in that the radicals of the polyfunctional compound are present in the polyester in an amount of 0.5 to 1.2% by weight, based on the dicarboxylic acid fraction.

3. A heat-curable coating composition according to claim 1 or 2, characterised in that the polyfunctional compound is an aliphatic or aromatic polycarboxylic acid of molecular weight less than 500.

4. A heat-curable coating composition according to claim 1 or 2, characterised in that the polyfunctional compound is a polyol of molecular weight less than 250.

5. A heat-curable coating composition according to claim 1 or 2, characterised in that the polyfunctional compound has the formula

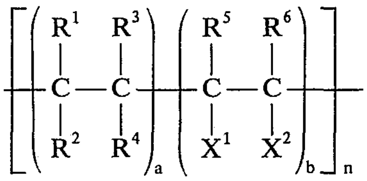

in which

n is an integer from 10 to 10,000,
a is 0 or an integer from 1 to 100,
b is an integer from 1 to 100,
$R^1$ to $R^6$ are each alkyl of 1 to 3 carbon atoms, aryl of 6 to 10 carbon atoms or $R^7O$-, where $R^7$ is alkyl of 1 to 6 carbon atoms,
$X^1$ is hydrogen, alkyl of 1 to 3 carbon atoms, or

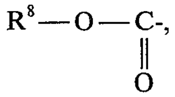

where $R^8$ is hydrogen or alkyl of 1 to 6 carbon atoms,
$X^2$ is $R^9O$- or

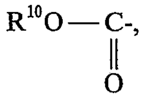

where $R^9$ is hydrogen or acyl of 1 to 8 carbon atoms an $R^{10}$ is hydrogen or alkyl of 1 to 6 carbon atoms.

**Revendications**

1. Agent de revêtement thermodurcissable à base d'un mélange formé d'un liant, d'un solvant organique et, le cas échéant, de pigments, de charges et d'autres adjuvants et additifs usuels, renfermant comme liant

A. de 5 à 25% en poids d'aminoplastes et
B. de 75 à 95% en poids de polyesters saturés, renfermant des groupes hydroxyle, obtenus à partir de diols aliphatiques comportant de 2 à 12 atomes de carbone dans la chaîne carbonée, le cas échéant de diols cyclo-aliphatiques et de 2,2-diméthylpropane-diol-(1,3), d'une part, et d'acides dicarboxyliques aromatiques, ainsi éventuellement que d'acides dicarboxyliques aliphatiques et cyclo-aliphatiques, d'autre part, les polyesters possédant un indice de viscosité compris dans un domaine de 40 à 80 $cm^3/g$ et un point de vitrification supérieur à 50° C,

ledit agent de revêtement étant caractérisé par le fait que le polyester du composant B. renferme, relativement à la fraction d'acide dicarboxylique, de 0,1 à 2% en poids de restes d'un composé polyfonctionnel comportant des groupes fonctionnels renferment de l'oxygène, la fonctionnalité du composé étant supérieure ou égale à 3.

2. Agent de revêtement thermodurcissable selon la revendication 1, caractérisé par le fait que les restes du composé polyfonctionnel sont renfermés dans le polyester à raison de 0,5 à 1,2% en poids, relativement à la fraction d'acide dicarboxylique.

3. Agent de revêtement thermodurcissable selon les revendications 1 et 2, caractérisé par le fait que le composé polyfonctionnel est un acide polycarboxylique aliphatique ou aromatique d'un poids moléculaire inférieur à 500.

4. Agent de revêtement thermodurcissable selon les revendications 1 et 2, caractérisé par le fait que le composé polyfonctionnel est un polyol d'un poids moléculaire inférieur à 250.

5. Agent de revêtement thermodurcissable selon les revendications 1 et 2, caractérisé par le fait que le composé polyfonctionnel répond à la formule générale

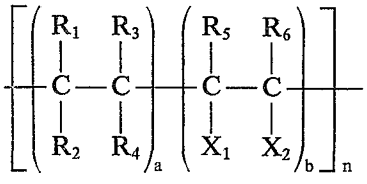

dans laquelle

n est un nombre d'une valeur de 10 à 10,000,

a est un nombre d'une valeur de 1 à 100 ou est égal à zéro,

b est un nombre d'une valeur de 1 à 100,

$R_1$ à $R_6$ représentent un reste alkyle comportant de 1 à 3 atomes de carbone, un reste aryle comportant de 6 à 10 atomes de carbone ou un groupe $R_7$–O-, où $R_7$ représente un reste alkyle comportant de 1 à 6 atomes de carbone,

$X_1$ représente de l'hydrogène, un reste alkyle comportant de 1 à 3 atomes de carbone, un groupe

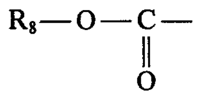

dans lequel $R_8$ représente de l'hydrogène ou un groupe alkyle comportant de 1 à 6 atomes de carbone,

$X_2$ représente un groupe $R_9$–O- ou

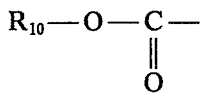

dans lequel $R_9$ représente de l'hydrogène ou un groupe acyle comportant de 1 à 8 atomes de carbone, et $R_{10}$ représente de l'hydrogène ou bien un groupe alkyle comportant de 1 à 6 atomes de carbone.